(19) Europäisches Patentamt
European Patent Office
Office européen des brevets

(11) **EP 4 194 886 A1**

(12) **EUROPEAN PATENT APPLICATION**

(43) Date of publication:
**14.06.2023 Bulletin 2023/24**

(21) Application number: **21306742.4**

(22) Date of filing: **10.12.2021**

(51) International Patent Classification (IPC):
**G01S 7/41** *(2006.01)*    **G01S 13/58** *(2006.01)*

(52) Cooperative Patent Classification (CPC):
**G01S 7/417; G01S 7/415; G01S 13/583**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **CY Cergy Paris Université**
  **95000 Cergy (FR)**
- **Centre national de la recherche scientifique**
  **75016 Paris (FR)**
- **École Nationale Supérieure de l'Électronique et de**
  **ses Applications**
  **95800 Cergy (FR)**
- **Technische Universiteit Delft**
  **2628 CN Delft (NL)**
- **The Court Of Edinburgh Napier University**
  **Edinburgh**
  **Lothian EH4 1DJ (GB)**

- **The University Court of the University of Glasgow**
  **Glasgow G12 8QQ (GB)**

(72) Inventors:
- **LE KERNEC, Julien**
  **29300 Quimperle (FR)**
- **LI, Zhenghui**
  **Glasgow, G3 7LD (GB)**
- **ABBASI, Qammer Hussain**
  **Glasgow, G77 6FD (GB)**
- **ROMAIN, Olivier**
  **91230 MONTGERON (FR)**
- **FIORANELLI, Francesco**
  **2600 AA Delft (NL)**
- **YANG, Shufan**
  **Edinburgh, EH14 1DJ (GB)**

(74) Representative: **A.P.I. Conseil**
**Immeuble Newton**
**4, rue Jules Ferry**
**64000 Pau (FR)**

(54) **METHOD AND DEVICE FOR HUMAN ACTIVITY CLASSIFICATION USING RADAR MICRO DOPPLER AND PHASE**

(57) The invention relates to a method (100) of classifying in real-time human activity from a micro-Doppler signature image based on features extracted from phase information and unwrapped phase information. The invention relates also to a device for characterizing in real-time a human activity comprising : a radar (2) transmitting and receiving radar signals having a software interface for configuring the form of the transmitted signal and processing and calculation means (3) coupled to the radar, configured to, in real-time, implementing the method.

EP 4 194 886 A1

FIG. 4

**Description**

**FIELD OF THE INVENTION**

The invention relates to the field of real-time detection and characterization of the body motion of a subject. More particularly, the invention relates to a method and a device for real-time classification of human activity using micro-Doppler signatures.

**BACKGROUND OF THE INVENTION**

In recent years, human activity recognition has been required in a series of applications, including healthcare (e.g. in diagnostic applications), motion analysis and security surveillance (e.g. in nursing homes, jails, public areas). Radar is becoming increasingly irreplaceable in this field due to its unique advantages, compared with wearable devices and image/camera sensors, such as insensitivity to lighting and weather condition, privacy compliance (no image of users and private environments are collected), and contactless sensing (no device to wear or carry). Conventionally, radar-based human activity recognition uses the Micro-Doppler signature, which is a powerful representation of body micro-motions, synthesizing the Doppler components induced by different body parts such as limbs, legs, head and fingers. These micro-Doppler signatures contain kinematic characteristics and reflect the exclusive motion pattern of a target, and therefore they are widely used in human activity recognition. Most of the current research and implementations focus on classification algorithm accuracy instead of computational efficiency and pre-processing of data. As a consequence, the proposed classification algorithms are often very complex, hence requiring significant computational resources.

There is still a need for a highly accurate recognition method based on the analysis of Micro-Doppler signature, which would necessitate low computational resources to further allow implementation in embedded platforms to facilitate real-time characterization of human activity. WO2021069518 discloses a method based on the analysis of micro-Doppler signature.

It has been now surprisingly discovered that phase information derived from Micro-Doppler spectrograms can be advantageously used to reach high levels of accuracy while requiring low computational and/or hardware resources through the method as disclosed below.

**SUMMARY**

The following sets forth a simplified summary of selected aspects, embodiments and examples of the present invention for the purpose of providing a basic understanding of the invention. However, this summary does not constitute an extensive overview of all the possible aspects, embodiments and examples of the invention. The sole purpose of this summary is to present selected aspects, embodiments and examples of the invention in a concise form as an introduction to the more detailed description of the aspects, embodiments and examples of the invention that follow.

In particular, the invention proposes **a method of classifying in real-time human activity** from a micro-Doppler signature image comprising :

- acquiring at least:
  one complex-valued spectrogram image comprising a plurality of pixels in an RGB code from a radar having a phase image, an unwrapped phase image and an amplitude image associated with said complex-valued spectrogram image ;

- converting the amplitude spectrogram image into a grayscale image to obtain monochromatic pixels;

- obtaining a binary image mask to identify a Region Of Interest (ROI) comprising one or several segmented areas, using an adaptive or a fixed threshold based on amplitude levels of the monochromatic pixels of the grayscale image;

- applying the binary masked image with the identified ROI on phase image associated with the complex-valued spectrogram image or on unwrapped phase image associated with the complex-valued spectrogram image to obtain, respectively, masked phase image or masked unwrapped phase image;

- calculating features from said masked phase image or masked unwrapped phase image;

- classifying the micro-Doppler image signature in a class relating to the human activity, according to a set of the calculated features, using a classifier trained with features calculated applying the above steps on spectrogram images of known human activities.

The present invention aims to overcome the drawbacks of prior art. In particular, the present invention proposes a surprising method for the recognition of human activities using radar with very high accuracy (i.e. more than 80%), and that can surpass current techniques. At the same time, computational resources are significantly reduced, making possible real-time implementation.

**According to other optional features of the method, it can optionally include one or more of the following characteristics alone or in combination** :

- the step of applying binary image mask further comprises applying binary image mask to the spectrogram images to obtain masked spectrograms with the isolated ROI, and calculated features from the masked spectrograms with ROI for micro-Doppler image signature classification,
- calculated features used to classify the micro-Doppler image signature are geometric features of the ROI of the amplitudes (masked spectrogram) and/or phases (masked phase and/or masked unwrapped phase), preferably selected from the perimeter, area, centroid, eccentricity, orientation and/or major and minor axis length of the ROI,
- calculated features are chosen from textural features, empirical features, physical features, automatically extracted features or radar features of the masked spectrogram,
- the binary image mask obtained in step is obtained by :

    - selecting an initial threshold $\mu$,
    - updating the initial threshold $\mu$, based on information contained in the ROI selected to obtain a final threshold, said updating step comprising steps of:

        a- dividing the image according to the pixel value and the threshold $\mu$ such as the pixel value is smaller or greater than the threshold $\mu$,
        b- selecting another threshold T corresponding to the average pixel value,
        c- comparing the threshold $\mu$ and the another threshold T :

        if the difference between $\mu$ and T is greater than or equal to a predetermined value V, then use threshold T instead of $\mu$ and repeat steps a-c;
        if the difference is lower than the predetermined value, then selecting the threshold T as the final threshold,
    - implementing the final threshold value to binarize the grayscale spectrogram image, thereby obtaining the binarized image mask.

- the binary image predetermined value V is comprised between 0.05 and 1,
- the calculated features are calculated using deep learning,
- textural features of the image are selected from the local binary pattern and/or moment of the image,
- radar features are selected from the entropy of spectrogram, skewness of spectrogram, centroid of spectrogram, bandwidth of spectrogram, energy curve and/or singular vector decomposition,
- the set of calculated features used to classify the micro-Doppler image signature is obtained by fusing feature level or decision level information from at least two categories of: the binary image mask, the masked phase image, the masked unwrapped phase image, or masked spectrogram,
- a feature selection step by using a wrapper method, a filter method and/or an embedded method,
- the feature selection step is performed by applying a Sequential Feature Selection (SFS) algorithm or a Sequential Forward Floating Selection (SFFS) algorithm on calculated features,
- the step of classifying comprises a step of pooling and classifying the calculated features using a normal or a hierarchical classification algorithm,
- it is applied to the micro-Doppler signature with a sliding subwindow, calculated features of the image corresponding to each sliding window being used to classify each image of each sliding window in a class related to human activity.

According to **another aspect** of the present invention, it is provided a device for characterizing in real-time a human activity comprising :

- a radar transmitting and receiving radar signals having a software interface for configuring the form of the transmitted signal,

- processing and calculation means coupled to the radar, being configured to, in real-time :

  • acquire at least one complex-valued spectrogram image comprising a plurality of pixels in an RGB code from a radar having a phase image, an unwrapped phase image and an amplitude image associated with said complex-valued spectrogram image;
  • convert amplitude spectrogram image into a grayscale image to obtain monochromatic pixels;
  • obtain a binary image mask to identify a region of interest (ROI) comprising one or several segmented areas by using an adaptive or a fixed threshold based on amplitude levels of the monochromatic pixels of the grayscale image;
  • apply the binary masked image with the identified ROI on phase image associated with the complex-valued spectrogram image or on unwrapped phase image associated with the complex spectrogram image, to obtain, respectively, masked phase image or masked unwrapped phase image;
  • calculate features from said masked phase image or masked unwrapped phase image;
  • classifying the micro-Doppler image signature in a class relating to the human activity, according to a set of the calculated features, using a classifier trained with features calculated applying the above steps on spectrogram images of known human activities, said processing and calculation means comprising said trained classifier; and

- storage means coupled to the processing and calculation means to store the classifier, the micro-Doppler images, the grayscale images, the binary mask, the masked images and the classification decisions.

**According to other optional features of the device, it can optionally include one or more of the following characteristics alone or in combination** :

- the processing and calculation means are also configured to, in real-time, obtain masked spectrograms with the isolated ROI by applying binary image mask to the spectrogram images, and use calculated features from said masked spectrograms with ROI to classify the micro-Doppler image signature,
- the processing and calculation means are configured to calculate geometric features of the ROI and/or of the amplitudes (masked spectrogram) and/or pahses (masked phase and/or unwrapped phase), and to use it to classify the micro-Doppler image signature in a class relating to the human activity,
- the processing and calculation means are configured to fuse calculated features at feature level or decision level information from at least two categories of: the binary image mask, the masked phase image, the masked unwrapped phase image, or masked spectrogram,
- it is embedded.

**FIGURE LEGENDS**

The foregoing and other objects, features and advantages of the present invention will become more apparent from the following detailed description when taken in conjunction with the accompanying drawings in which :

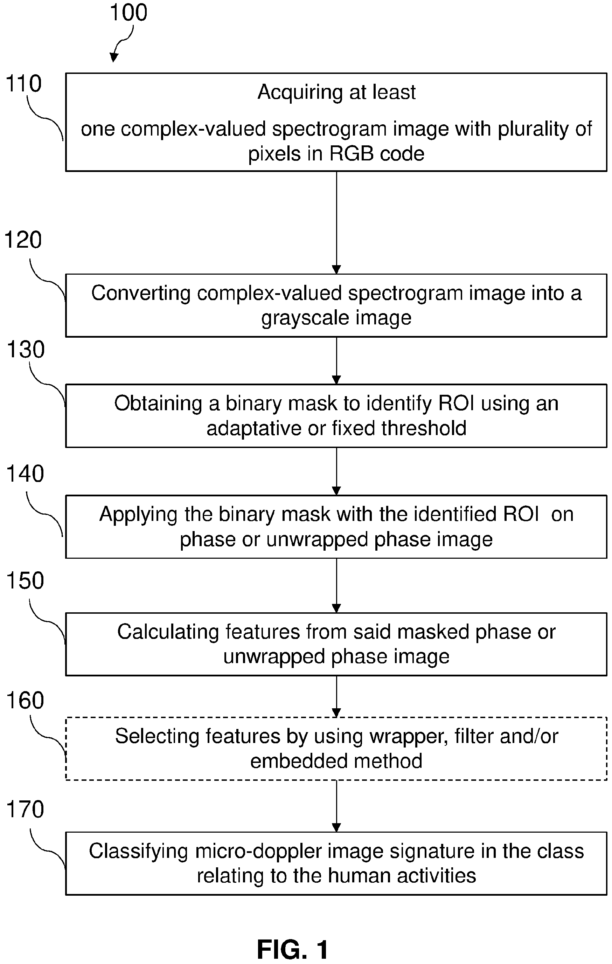

[Fig 1] Figure 1 represents a flowchart of a method according to an embodiment of the invention. Steps framed in dotted lines are optional.

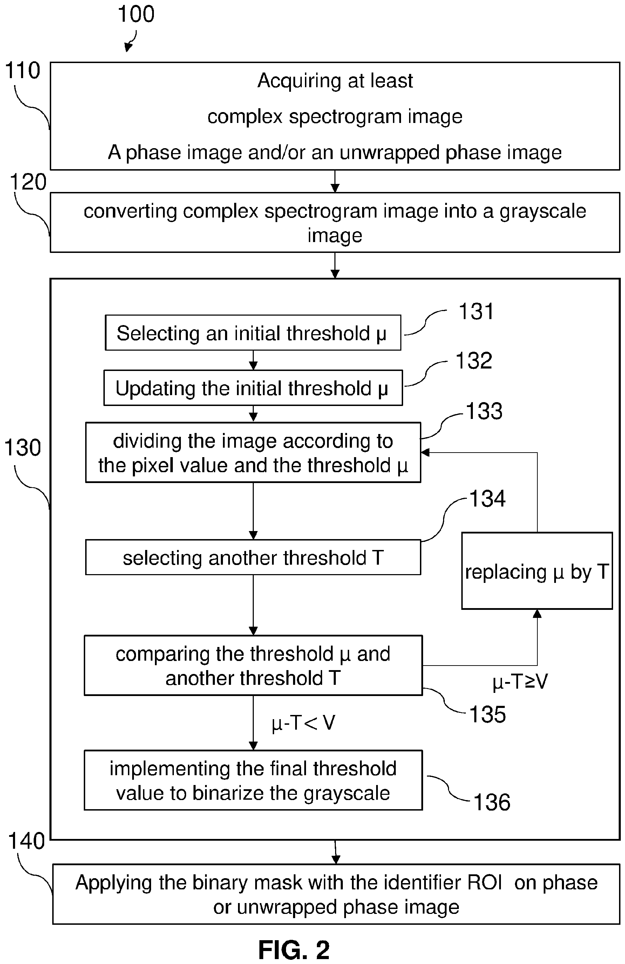

[Fig 2] Figure 2 details a specific step of the method according to an embodiment of the present invention, as it happens the step of obtaining a binary image mask to identify ROI comprising one or several segmented areas using an adaptative or fixed threshold based on amplitude levels of monochromatic pixels of the grayscale image.

[Fig 3] Figure 3 shows micro-Doppler signatures of typical samples. A : represents acitivity of walking back and forth, B : sitting down on a chair, C : Standing up from a chair, D : Picking up an object, E : Drinking water and F : Fall.

[Fig 4] Figure 4 represents an example of calculating binary mask to generate masked phase and masked unwrapped phase.

[Fig 5] Figure 5 shows an example of conventional and hierarchical classification.

[Fig 6] Figure 6 represents features selection with SFFS for individuals and fusion approaches

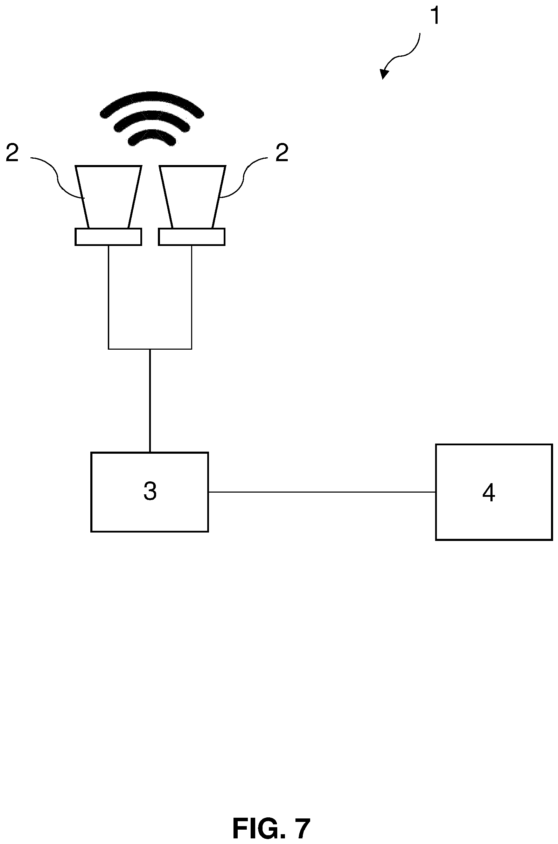

[Fig 7] Figure 7 represents a device for characterizing in real-time a human activity according to an embodiment of the invention.

The figures do not necessarily respect the scales, in particular in thickness, for purposes of illustration.

Aspects of the present invention are described with reference to flowcharts and/or block diagrams of methods, apparatus (systems) and computer program products according to embodiments of the invention.

In the figures, flowcharts and block diagrams illustrate the architecture, functionality and operation of possible implementations of systems, methods and computer program products according to various embodiments of the present invention. In this regard, each block in the flowcharts or block diagrams may represent a system, device, module or code, which includes one or more executable instructions to implement the specified logic function(s). In some implementations, the functions associated with the blocks may appear in a different order than that shown in the figures. For example, two blocks shown in succession may, in fact, be executed substantially simultaneously, pipelined, or the blocks may sometimes be executed in reverse order, depending on the functionality involved. Each block of the block diagrams and/or flowchart, and combinations of blocks in the block diagrams and/or the flowchart can be implemented by special hardware systems that perform the specified functions or acts or perform combinations of special equipment and computer instructions.

## DETAILED DESCRIPTION

### Definitions

Radar transmits a signal to a target, said signal interacts with the target, and then returns back to the radar. The change in the properties of the returned signal contains characteristics of interest of the target. When the transmitted signal of a coherent radar system hits moving targets, the carrier frequency of the signal will be shifted, known as the Doppler effect. The Doppler frequency shift reflects the velocity of the moving target. Mechanical vibration or rotation of a target, or structures on the target, may induce additional frequency modulations on the returned radar signal, which generate sidebands about the target's Doppler frequency, called the micro-Doppler effect [1]. As used herein, **"micro-Doppler signature"** therefore refers to micro-Doppler features attached to the target of the radar and which can be specific to this target or its movements. When related to a human, said signature can comprise the micro-Doppler effect due to the motion of the body and/or movements of the limbs or other body parts.

**"Human activity"** refers to any movement or motion, or event susceptible to generate a micro-Dopler signature, as walking back or forth, sitting down on a chair, standing up from a chair, picking up an object, holding an object, drinking, eating, falling, running, crawling, climbing, abnormal gait (e.g. parkinsonian gait) etc...

**"Real-time"** as used herein refers to the way a system receives data and then communicates it, makes it available immediately, or process it immediately to generate out data immediately or almost immediately available.

**"Complex-valued spectrogram image"** refers to the association of the amplitude spectrogram image represented by a plurality of pixels in RGB code from a radar and the phase spectrogram image also represented by a plurality of pixels in RGB code from a radar.

**"Phase image"** refers to the wrapped phases calculated from the complex (a+jb) micro-Doppler signature. The amplitude of the complex micro-Doppler signature is often used for radar-based human activity classification. However, the phase information from the micro-Doppler signatures is often discarded. Here, amplitude and phase refer to the polar $Ae^{j\varphi}$ form of complex numbers (a+jb). Every point $M_{i,j}$ of the complex matrix containing the micro-Doppler signature can be represented either as a complex number (a+jb) or an amplitude and a phase $Ae^{j\varphi}$. The wrapped phase is bounded between $-\pi$ and $\pi$.

**"Unwrapped phase image"** refers to a phase image where the phase has been unwrapped this means that unwrap phase shifts cannot be greater than $\pi$ if so then the unwrap function shifts the angles by adding multiples of $\pm 2\pi$ until the jump is less than $\pi$.

**"Features"** as used herein refers to characteristics of the image or masked image from the spectrograms and associated with human activity. They can be of any kind, and extracted from either phase or amplitude information, as: geometrical properties (of the ROI), textural features (as binary pattern of the image or moment of the image), physical features that are directly related to the kinematics of the movement analysed and extracted from the micro-Doppler signatures, automatically extracted features (e.g. as determined by artificial intelligence), empirical feature (i.e handcrafted features analytical or arbitrarily defined derived from domain knowledge or observation of the signatures), when amplitude information is used in the method, radar features can also be used.

**"Deep learning"** refers to machine learning methods, supervised or unsupervised, based on artificial neural networks in which multiple layers of processing are used to extract progressively higher-level features from data.

## Method of classifying in real-time human activity

It has been surprisingly discovered that phase information associated with spectrograms from micro-Doppler signatures can be used to accurately characterize a human activity. Accordingly, in its first aspect, the invention relates to a method of classifying in real-time human activity from a micro-Doppler signature image.

Said method comprises steps of :

Data Collection and Pre-processing which comprises

-   acquiring at least: one complex-valued spectrogram image 110 comprising a plurality of pixels in an RGB code from a radar, whose value is a function of reflectivity and speed of the subject over time, having a phase image, an unwrapped phase image and an amplitude image associated with said complex-valued spectrogram image 110;

Determination of Region Of Interest (ROI) comprising one or several segmented areas which comprises the step of :

-   Converting said complex-valued spectrogram image 110 into a grayscale image 120 to obtain monochromatic pixels;

-   Obtaining a binary image mask 130 to identify a Region Of Interest (ROI) comprising one or several segmented areas, using an adaptive or a fixed threshold based on amplitude levels of the monochromatic pixels of the grayscale image;

These two steps aim to generate low noise micro-Doppler signature images; indeed, when only a notch filter is implemented, clutter from the background still exists in a large number of pixels. Hence, identifying the ROI of the spectrogram contributes to lowering the computational complexity and maintaining the robustness of the analyzed features. Either a fix or an adaptative threshold can be applied to extract the ROI of spectrograms.

The color pixels of the micro-Doppler signatures have an intensity whose value is a function of a reflectivity and a speed of the subject and is distributed on a gradual scale (in the sense of continuous). Thus, the conversion of the color Doppler image (complex spectrogram image) into the monochromatic image can consist in converting, for each pixel of the color Doppler image, the triplet of values representing the levels of the primary colors of each color pixel into an integer value which thereby applying a weighted sum and representing a luminosity or a luminous intensity or luminance associated with a representation pixel thus produced.

In one embodiment, the calculation of the monochromatic image is carried out with the gray color, which is a function of the value of the color channels (R, G, B) of the color pixels, for example, by following the formula: Gray = 0.299 * Red + 0.587 * Green + 0.144 * Blue, for each pixel in color micro-Doppler images that have a red intensity value, a green intensity value and a blue intensity value. According to another embodiment, the image segmentation may be performed using a luminance-varying binary intensity threshold.According to another embodiment, the segmentation of the image may be performed using a binary luminous intensity threshold according to the Otsu method [9].

Features extraction, which comprises the steps of:

-   applying the binary masked image 140 with the identified ROI on phase image associated with the complex-valued spectrogram image 110, or on unwrapped phase image associated with the complex spectrogram image 110 to obtain, respectively, masked phase image or masked unwrapped phase image;

-   calculating features 150 from said masked phase image or masked unwrapped phase image;

In this way, only the informative data from each image are considered to extract feature from said image.

Identifying human activity corresponding to the micro-Doppler signature image comprising the step of :

- classifying the micro-Doppler image signature 170 in a class relating to the human activity, according to a set of the calculated features, using a classifier trained with features calculated applying the above steps on spectrogram images of known human activities.

In a particular embodiment of the method according to the invention, further features are extracted from the spectrogram and used together with features related to phases information. Combining features extracted from the spectrogram together results in better accuracy of the method in classifying the human activity depicted by the micro-Doppler signature. Then, in this embodiment, applying the binary image mask to the spectrogram images to obtain masked spectrograms with the isolated ROI and calculated features from the masked spectrograms with ROI for the micro-Doppler image signature classification 170.

In another particular embodiment, the method of the invention is applied to the micro-Doppler signature with a sliding subwindow, and the calculated features of the image corresponding to each sliding window are used to classify each image of each sliding window in a class related to human activity.

Advantageously with the sliding subwindow, the micro-Doppler images allow performing tracking to modify the acquisition parameters such as measurement time, light intensity, transmitted waveform, according to the segmented areas and the expected classes, to modify the next segmented areas to come for example.

Further particular embodiments of the method can be considered in regard to the features, the thresholding method used to obtain the binarized image, features fusion, selection of the features and/or classifier as presented below:

*Features*

All the features extracted from the phases domains and/or spectrogram can be used in the method of the invention. More particularly calculated features used to classify the micro-Doppler image signature are chosen from ROI geometrical features, textural features, empirical features, physical features, automatically extracted features or radar features of the masked spectrogram or are calculated to classify the micro-Doppler image signature 170, or a combination thereof.

ROI geometrical features are particularly preferred. Indeed, they are those that contain the most information and are found, in the method according to the invention, the most discriminative for human activity classification. ROI geometric features can be chosen from: perimeter, area, centroid of degree 1, centroid of degree 2, eccentricity, bounding box (rectangle or ellipse), orientation and/or major and minor axis length of the ROI, moments of order 0, 1, 2 to n etc... Particularly preferred ROI geometric features can be chosen from: perimeter, area, centroid of degree 1, centroid of degree 2, eccentricity, orientation and/or major and minor axis length of the ROI, or a combination thereof. Also, a particular embodiment of the method of the invention comprises the use ROI geometric features calculated from masked phase image and/or or masked unwrapped phase image and/or masked spectrogram.

The area can be defined as :

$$Area = \sum_x \sum_y p_{x,y} \ where \ p_{x,y} \in \{forme\ i\}.$$

Wherein Px,y is the value of the pixel with x,y coordinates in the image. The area counts the number of pixels with the same value, '1', in the image.

The perimeter can be defined as the sum of px,y belonging to the perimeter of the area. Perimeter is calculated as the sum of the pixel of the same value in the perimeter of the area.

The centroid of degree 1 corresponds to the center of mass of the ROI, of coordinates $g_x$ and $g_y$, which can be calculated using the following formula:

$$gx = \frac{1}{N}.\Sigma_{i=0}^{N} p_{x_i} \ and \ gy = \frac{1}{N}.\Sigma_{i=0}^{N} p_{y_i}$$

where N is the number of pixels in the image, $p_{xi}$ pixel abscissa et $p_{yi}$ pixel ordinate.

The centroid of degree 2 can be calculated applying the following formula :

$$gx_2 = \frac{1}{N}.\Sigma_{i=0}^{N} p_{x_i}^2 \ and \ gy_2 = \frac{1}{N}.\Sigma_{i=0}^{N} p_{y_i}^2$$

where N is the number of pixels in the image, $p_{xi}$ pixel abscissa et $p_{yi}$ pixel ordinate.

The orientation is obtained by determining the straight line passing through the moment of order 1, with minimal distance of the contour points to the straight line.

The length (in pixels) of the major axis of the ellipse that has the same normalized second central moment as the region is returned as a scalar, which is also named the major axis length. Similarly, if the minor axis of the ellipse is used, we will obtain the minor axis length.

Eccentricity is a scalar that represents the eccentricity of an ellipse with the same secondmoments as the region. The eccentricity calculated as the ratio of the distance between the foci of ellipse and its major axis length. Eccentricity value ranges from 0 to 1. Degenerate cases are 0 and 1 : An ellipse with a eccentricity of 0 is actually a circle, while an ellipse with a eccentricity of 1 is a line segment.

The textural feature can be chosen from local binary pattern of image or moment of image or a combination thereof.

Radar features can be chosen from the entropy of spectrogram, skewness of spectrogram, the centroid of the spectrogram (mean and variance), the bandwidth of spectrogram (mean and variance), Energy Curve (mean, variance and Trapezoidal numerical integration), or singular vector decomposition (mean and variance of the first three vectors of components), or a combination thereof.

In a particular embodiment, the features are extracted using deep learning. Indeed it allows to automatically extract and identify unexpected features.

*Thresholding methods*

Either a fixed or adaptative thresholding method can be used to obtain the binarized image mask. In a particular embodiment of the method of classifying in real-time human activity from a micro-Doppler signature image, an adaptative threshold based on amplitude levels of the monochromatic pixels of the grayscale image to obtain the binary image mask 130 to identify a Region Of Interest (ROI) comprising one or several segmented areas.

In this embodiment, the binary image mask obtained in step 130 is obtained by :

- selecting an initial threshold μ 131,
- updating the initial threshold μ 132, based on information contained in the ROI selected to obtain a final threshold, said updating step 132 comprising steps of :

     a- dividing the image 133 according to the pixel value and the threshold μ such as the pixel value is smaller or greater than the threshold μ,
     b- selecting another threshold T 134 corresponding to the average pixel value,
     c- comparing 135 the threshold μ and the another threshold T :

     if the difference between μ and T is greater than or equal to a predetermined value V, then use threshold T instead of μ and repeat steps a-c;
     if the difference is lower than the predetermined value, then selecting the threshold T as the final threshold,
- implementing the final threshold value 136 to binarize the grayscale spectrogram image, thereby obtaining the binarized image mask.

More particularly, in this embodiment, the predetermined value V is comprised between 0.05 and 1, even more particularly 0.1 and 0.5, limits included.

The V value is chosen as such as to preserve as much of ROI as possible, and to lose less of information as possible.

Even more particularly, when the method comprises the use of an adaptative threshold, said adaptative threshold can be determined as it follows :
the initial threshold μ can be expressed as:

$$\mu = \frac{1}{N} \sum_{I(x,y) \in S} I(x, y)$$

According to the initial threshold value μ, the spectrogram image is then divided into two parts: *P1* and P2, where *P1* is the image region that has a pixel value greater than μ and *P2* is the image region which has a pixel value smaller than μ. Then, the threshold *T* can be described as:

$$T = \frac{1}{2}\left[\frac{1}{N_1}\sum_{I(x,y)\in p_1} I(x,y) + \frac{1}{N_2}\sum_{I(x,y)\in p_2} I(x,y)\right]$$

Where $N1$ and $N2$ are the number of pixels in part $P1$ and P2, respectively.

This process is repeated until the difference is smaller than the predetermined value V, which is determined to ensure to preserve as much of the ROI as possible. The final threshold value is then implemented to binarize the grayscale spectrogram image. It can be represented as follows:

$$b(x,y) = \begin{cases} 1, & I(x,y) \geq T \\ 0, & I(x,y) < T \end{cases}$$

Where $b(x, y)$ is the pixel value of the mask.

Applying an adaptive threshold is of particular interest, especially in cases where intensity and/or amplitude attached to a spectrogram image that reflects an activity vary such that applying a fixed threshold would be seen as inappropriate for certain activities. Further simply applying a notch threshold is not sufficient to clear background clutter that might pollute the subsequent analysis with non-informative data.

*Features fusion*

As shown in the experimental section, the method of the invention allows the accurate recognition of human activities. In some instance, fusion of the features at the feature level, or at the decision level can allow to gain further accuracy, and in any case results in the reduction of the computational complexity thereby facilitating implemetnation of real-time recognition and embedment.

In the method according to the invention, such fusion of information can be implemented either at the feature level, domain level or decision level.

Also, in a particular embodiment of the method, the set of calculated features used to classify the micro-Doppler image signature 170 is obtained by fusing feature level or decision level information from at least two categories of: the binary image mask, the masked phase image, the masked unwrapped phase image, or masked spectrogram.

More particularly features levels that are fused can be :

- features of the binary image mask and masked phase image,
- features of the binary image mask and masked unwrapped phase image,
- features of the masked phase image and unwrapped phase image,
- features of the binary image mask and masked phase image and masked unwrapped phase image,
- features of the masked spectrogram and masked phase image, or
- feature of the masked spectrogram and masked phase image and binary image mask.

*Features selection*

The feature selection aims to eliminate redundant and duplicate information. This allows increasing classification accuracy and decrease computational loading.

Also, in a particular embodiment of the method of the invention, a step feature selection step 160 is applied by using a wrapper method, a filter method and/or an embedded method.

In a more particular embodiment, said selection is implemented using a wrapper method; preferred wrapper method are selected from a Sequential Feature Selection (SFS) algorithm or a Sequential Forward Floating Selection (SFFS) algorithm. They allow determining the optimal feature combinations by ranking the features using a classifier and its accuracy as a measure. SFFS is particularly preferred because SFFS is particularly preferred as this feature selection method not only performs progressive adding but additional removing, which means it eliminates the features from the selected subset when the subset is deemed to be 'better' by the classifier after removal of a particular feature.

It will be understood that the method according to the invention can incorporate either a feature fusion or a feature selection step. Further, as shown in the experimental section, it can be of particular interest to implement both feature fusion and selection steps in order to further gain in computational and embedment capacity, as well as in accuracy of the method of classifying human activity from a micro-Doppler signature according to the invention.

Also, in a particular embodiment, in the method of the invention, the calculated features are fused at the feature level or decision level information and then subjected to a selection step. In another particular embodiment, the selection step is applied before the fusion step.

*Classifier*

Any classification method can be used to classify the micro-Doppler image signature 170 in a class relating to human activity as defined above.

More particularly, a class related to human activity can be walking back or forth, sitting down on a chair, standing up from a chair, picking up an object, holding an object with one or two hands, drinking, eating, falling, running, crawling, climbing, abnormal gait (e.g. parkinsonian gait), a class attached to the Time Up and Go (TUG) test etc...

A classifier may be a binary classifier and/or a cascade of binary classifiers, a multi-class classifier such as for example, support vector machines (SVM).

Nevertheless, it has been found that classifiers of hierarchical structure are particularly adapted to the method according to the invention. Indeed, it allows to further improve the accuracy of the method, compared to the method of the invention wherein a conventional convolutional supervised classification approach is applied. This further allows to significantly reduce the use of resources.

Also in particular embodiment of the method, the step of classifying comprises a step of pooling and classifying the calculated features using a normal or a hierarchical classification algorithm.

According to another embodiment, the classifier of the processing and computing means, may be configured to classify the binary images without using neural networks, such as convolutional neural networks or multilayer neural networks.

The transformation by the binarization of the micro-Doppler image passes from 3D information to 2D information but makes it possible to make rapid calculations and is efficient for classifying the images.

In a particular embodiment of the method according to the invention, aggregates: an adaptative thresholding technique on spectrograms, phase images and unwrapped phase images, followed by extracting features, information fusion and feature selection for increasing accuracy and finally classification using a hierarchical structure based on prior results in order to boost the overall performance.

**Device for characterizing in real-time a human activity**

In a second aspect, the invention relates to a device for characterizing in real-time a human activity adapted to implement, in any one of its embodiments, the method of classifying in real-time human activity from a micro-Doppler signature image of the first aspect of the invention.

More particularly said device comprises :

- a radar 2 transmitting and receiving radar signals and having a software interface for configuring the form of the transmitted signal,
- processing and calculation means 3 coupled to the radar, being configured to, in real-time, implemented the above method in any of its embodiments, and
- storage means 4 coupled to the processing and calculation means to store the classifier used in the method, the micro-Doppler images, the grayscale images, the binary mask, the masked images and the classification decisions preferably obtained from the data.

In an embodiment, the radar 2 is mono-static (it comprises one transmitter and one receiver).

In another embodiment, the radar 2 is multistatic (it comprises one transmitter and several receivers). With a multistatic configuration, knowing the delays between the echoes coming from three emitters while being reflected on the same target makes it possible to determine the coordinates of the position of this target (intersection of three ellipsoids of revolution, as in the figure opposite. Further, using the Doppler shifts of the signals, it is possible to determine the components of the speed vector of the target. A multistatic radar is particularly preferred. In a more preferred embodiment, the radar is an interferometric radar: it allows measuring the angular speed, to further increase robustness of classification with respect to target aspect angle [10].

The radar 2 may transmit radar signals according to a frequency band between 6 MHz and 250 GHz, preferably between 2 and 90 GHz, more preferably between 4 and 12 GHz.

The processing and computing means 3 may be configured to calculate geometric features of the ROI and to use it to classify the micro-Doppler image signature in a class relating to the human activity. The geometric features of each segmented area of binary pixels may be chosen according to an embodiment from the following list: area, perimeter, centroid of degree 1, centroid of degree 2, orientation, computation of moments of order 0, 1 and 2 at n, bounding square, and/or bounding ellipse.

As explained above and illustrated in the experimental part, the method of the invention allows substantive gains in accuracy and performance, but also in terms of computational loading. Also, the method is particularly suitable for embedded implementation. Accordingly, in an embodiment, the device for characterizing in real-time a human activity according to the second aspect of the invention is embedded, which is particularly advantageous and expand the possible applications of the method.

Advantageously, the device 1 is configured to continuously, in real-time, characterize the actimetry of the subject. Also, the storage means 4 may be continuously fed with the classification obtained for the activity of the subject at different times allowing to detecting its evolution. The storage means 4 can be configured to store the successive sequences of classes obtained, and determine an activity map of the subject.

The following examples illustrate the invention without limiting its scope in any way.

**EXAMPLE - In human activity recognition**

The micro-Doppler signature contains plenty of information from not only the target but the background. The method is designed to outline the region of interest (ROI), the targeted part of the spectrogram image, also named 'mask'. An adaptive thresholding method at the pre-processing stage is applied to focus on the region of interest using the phase information from the micro-Doppler signature. Afterwards, 'masks' are applied to the phase and unwrapped phase information to highlight the ROI in both domains. A further feature selection [2] and information fusion [3] can be applied to concurrently increase accuracy and reduce computational loading. Additionally, a hierarchical classification model, which divides the normal classification into several stages, is introduced and found to even improve overall performance.

As shown below, using a known dataset, such a method allows human activity classification with particularly high levels of accuracy with a minimal number of features.

**Material and Methods**

Data Collection

The data were collected using an off-the-shelf Frequency Modulated Continuous Wave (FMCW) radar, which operates at 5.8 GHz with 400 MHz bandwidth, 1 ms sweep time and 128 complex samples per sweep. A total of 1754 motion files were recorded from 72 participants aged 21 to 98 years old. The dataset was composed of six types of human activities, including walking, sitting down, standing up, picking up an object, drinking water and fall. Note that the dataset is not balanced, i.e. the elderly participants did not perform the 'fall' activity for obvious reasons. This dataset is summarized in Table I.

[Table 1] : Summary of the dataset

| No. | Activity Description | Number of samples | Data length |
|---|---|---|---|
| A1 | Walking back and forth | 312 | 10s |
| A2 | Sitting down on a chair | 312 | 5s |
| A3 | Standing up from a chair | 311 | 5s |
| A4 | Picking up an object | 311 | 5s |
| A5 | Drinking water | 310 | 5s |
| A6 | Fall | 198 | 5s |

Pre-Processing

The raw data are first converted into a range-time map with the steps below. For different types of samples, the duration of recordings varies between 5 and 10 s, where the number of chirps is N = 5000 and N = 10000, respectively.

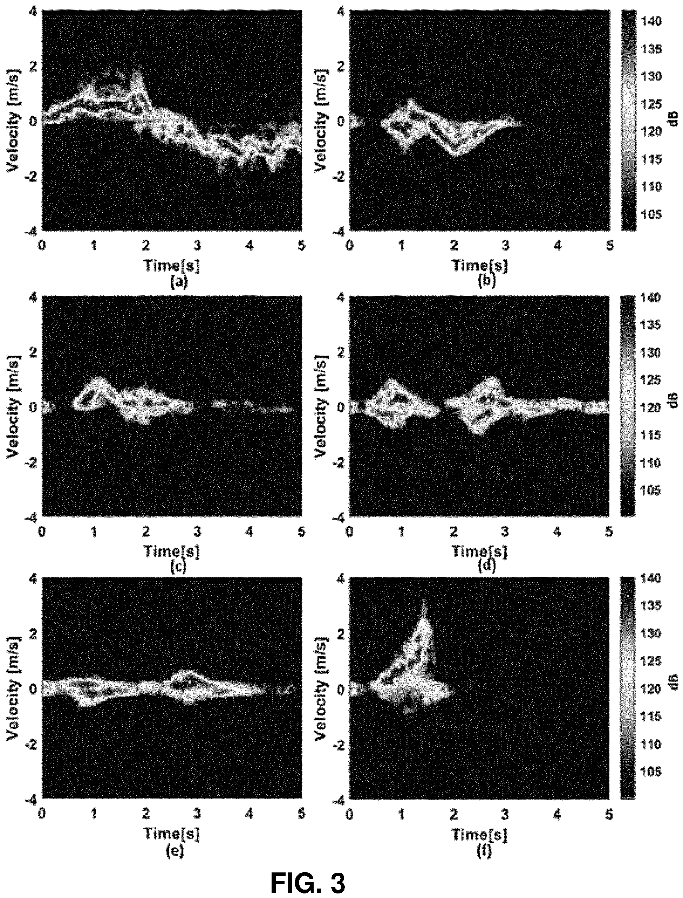

Afterwards, a 128-point Hamming-windowed fast Fourier transform is applied to each chirp, and a 4th-order high-pass Butterworth notch filter with cut-off frequencies as 0.0075Hz is also used to remove static clutter. After obtaining the range-time map, a Short-Time Fourier transform (STFT) is implemented using a 0.2s Hamming window with 95% overlapping factor on the Range-time map to generate micro-Doppler signatures. Typical micro-Doppler signatures of each type of activity are shown in Fig.3. Noise is observed in the micro-Doppler signature, and the intensity and amplitude of different data are varied.

<u>Adaptative thresholding methods</u>

As shown in Fig. 3, although the notch filter is implemented, background clutter still occurs in a significant number of pixels. The further feature extraction process would be burdened with these obstructions, which increases the computational complexity and degrades the robustness of the features, and it is of critical to define the ROI of the spectrogram.

An adaptive thresholding method is introduced to extract the region of interest of each spectrogram.

The proposed method binarizes the grayscale spectrogram image with a specific threshold T. The principle of this method is to select a threshold and then update it based on the information contained in the window being processed to focus on the ROI adaptively. The spectrogram image is firstly converted into a greyscale image. Suppose that the grayscale spectrogram image S has N pixels and each pixel value is represented as $I(x, y)$, the initial threshold $\mu$ can be expressed as:

$$\mu = \frac{1}{N} \sum_{I(x,y) \in S} I(x, y) \quad (1)$$

According to the initial threshold value $\mu$, the spectrogram image is divided into two parts: *P1* and *P2*, where *P1* is the image region that has a pixel value greater than $\mu$ and *P2* is the image region which has a pixel value smaller than $\mu$. Then, a new threshold *T* can be described as:

$$T = \frac{1}{2}\left[\frac{1}{N_1}\sum_{I(x,y) \in p_1} I(x, y) + \frac{1}{N_2}\sum_{I(x,y) \in p_2} I(x, y)\right] \quad (2)$$

Where *N1* and *N2* is the number of pixels in part *P1* and *P2*, respectively.

After the acquisition of both $\mu$ and *T*, they will be compared with each other. If the difference is greater than 0.1, then *T* will replace $\mu$ to segment the grayscale spectrogram image and calculate a new *T* through. This process is repeated until the difference is smaller than 0.1, which ensures to preserve as much of ROI as possible. The final threshold value is implemented to binarize the grayscale spectrogram image. It can be represented as follows:

$$b(x,y) = \begin{cases} 1, & I(x, y) \geq T \\ 0, & I(x, y) < T \end{cases} \quad (3)$$

Where $b(x, y)$ is the pixel value of the mask.

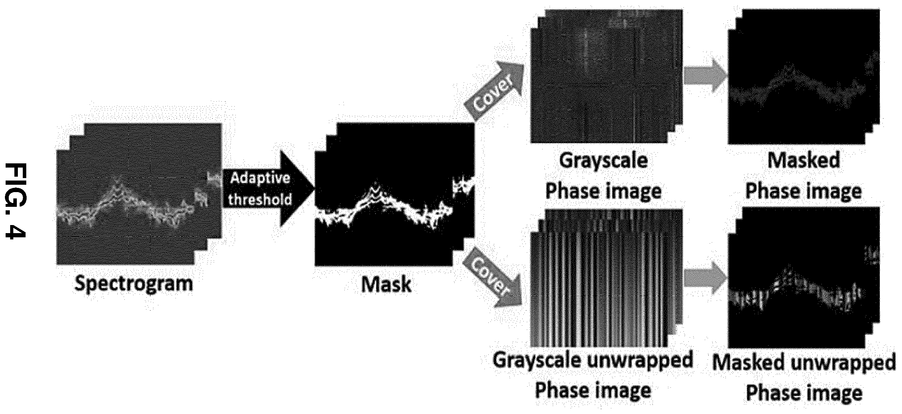

The binarized image can be used for feature extraction as well as a mask on the phase information, both on the grayscale wrapped and unwrapped phase images. They are subsequently named masked phase image and masked unwrapped phase image. The process of acquiring binary mask, masked phase, and masked unwrapped phase, are shown in Fig. 4, and they will be utilized for the next processes.

<u>Feature Processing and Hierarchical Structure</u>

68 features are evaluated, of which two categorized are considered: the property of ROI (WO2021069518, [4]) and texture of an image [5]. The first type depicts the geometrical properties of the ROI, such as centroid, perimeter, area, amongst others. The second type is characterized by the spatial distribution of intensity levels within a neighborhood, which contains information on the spatial arrangements of intensities in an image. All the features calculated in this experiment are listed in Table II.

[Table II] Summary of features

| ROI (geometrical) features | Feature dimensions |
| --- | --- |
| Perimeter of ROI | 1x1 |
| Area of ROI | $1\times1$ |
| Centroid of ROI | $1\times2$ |

(continued)

| ROI (geometrical) features | Feature dimensions |
|---|---|
| Eccentricity of ROI | $1\times1$ |
| Orientation of ROI | $1\times1$ |
| Major and Minor Axis Length of ROI | $1\times2$ |
| **Textural features** | **Feature dimensions** |
| Local Binary Pattern of image | $1\times59$ |
| Moment of image | $1\times1$ |

To further improve the overall performance and reduce the computational complexity, information fusion and feature selection are introduced. Information fusion is an advanced approach which can be used to overcome the limitation of individual domain features by pooling information or decision from different sources. It can be achieved through different levels of abstraction [3], typically divided into signal, feature and decision levels. In this embodiment, feature fusion is used. It cascades the features from different sensors or domains which has the same labels, as in equation 4 below, where $\cap$ represents the concatenation of features from different domains.

$$F_{fusion} = F_{mask} \cap F_{phase} \cap F_{unwrap} \ (4)$$

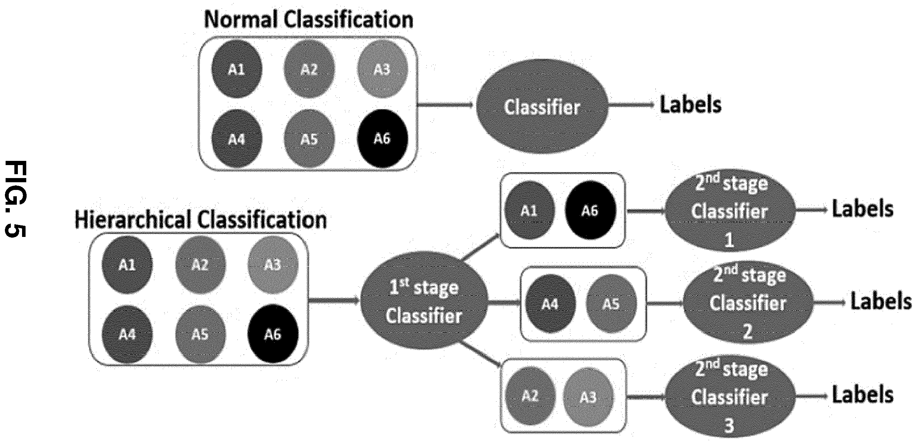

The feature selection technique is used to eliminate redundant and duplicate information to increase classification accuracy and decrease computational loading. It can employ three distinct strategies [2]: wrapper methods, filter methods, and embedded methods. Sequential floating forward selection (SFFS) is used.
Unlike convolutional supervised classification approaches, which feed all activities into the classifier simultaneously, the hierarchical structure classifies the activities into several sub-groups based on their similarity or misclassification rate. As is shown in Fig. 5, the hierarchical model permits the use of distinct feature sets and algorithms at different stage and therefore improving overall performance [6, 7], as shown below in the results section.

## Results

Thresholding evaluation

To investigate the effects of adaptive threshold T, seven thresholds ranging from T-10 to T+20 are applied to spectrograms, and the obtained masks are then applied to phase and unwrapped phase images. Three distinct categories of data are analysed separately to determine their contribution to classification. At this stage, a robust Quadratic-kernel support vector machine (Q-SVM) algorithm with 10-fold cross-validation is adopted to the activity classification. The results are shown in Table III to V.

[TABLE III]. CLASSIFICATION RESULTS FOR THE MASK WITH DIFFERENT THRESHOLDS

| % | A1 | A2 | A3 | A4 | A5 | A6 | Avg |
|---|---|---|---|---|---|---|---|
| T-10 | 96.8 | 91.3 | 87.7 | 63.0 | 77.1 | 89.9 | 84.3 |
| T-5 | 97.2 | 92.1 | **90.4** | 63.4 | **77.6** | 89.3 | **85.0** |
| T | 97.8 | 90.7 | 89.3 | 62.5 | 76.7 | **92.4** | 84.9 |
| T+5 | **98.7** | **93.3** | 86.9 | **64.7** | 69.3 | 89.9 | 83.8 |
| T+10 | 96.1 | 89.7 | 90.0 | 61.2 | 74.8 | 90.4 | 83.7 |
| T+15 | 97.4 | 90.4 97.4 | 90.3 97.4 | 64.4 97.4 | 75.1 97.4 | 91.2 97.4 | 84.8 |
| T+20 | 97.8 | 91.0 | 88.4 | 62.0 | 74.5 | 90.4 | |
| Avg : average | | | | | | | |

[TABLE IV]. CLASSIFICATION RESULTS FOR THE MASKED PHASE WITH DIFFERENT THRESHOLDS

| % | A1 | A2 | A3 | A4 | A5 | A6 | Avg |
|---|---|---|---|---|---|---|---|
| T-10 | 98.4 | 88.8 | 85.8 | 65.7 | 70.3 | 92.6 | 83.6 |
| T-5 | 97.4 | 86.6 | **87.4** | **68.0** | **71.6** | 84.8 91.9 | 84.8 **84.1** |
| T | 99.7 | 87.8 | 86.7 | 63.4 | 69.6 | 91.4 | 83.1 |
| T+5 | 98.4 | **89.1** | 84.5 | 61.5 | 67.8 | 91.9 | 82.2 |
| T+10 | 99.7 | 87.1 | 84.8 | 61.8 | 67.1 | 93.9 | 82.4 |
| T+15 | 99.7 | 87.5 | 84.2 | 59.9 | 65.1 | 93.4 | 81.6 |
| T+20 | **100** | 86.2 | 85.1 | 59.5 | 69.3 | **94.4** | 82.4 |
| Avg | 99.3 | 87.6 | 85.5 | 62.9 | 68.7 | 92.8 | |
| Avg : average | | | | | | | |

[TABLE V]. CLASSIFICATION RESULTS FOR THE MASKED UNWRAPPED PHASE WITH DIFFERENT THRESHOLDS

| % | A 1 | A2 | A3 | A4 | A5 | A6 | Avg |
|---|---|---|---|---|---|---|---|
| T-10 | 98.4 | 67.6 | **65.5** | 50.2 | **70.3** | 85.4 | 72.9 |
| T-5 | **99.4** | 69.2 | 65.1 | **54.7** | 66.1 | 85.4 | **73.3** |
| T | 98.0 | 70.1 | 59.2 | 54.0 | 69.3 | **87.9** | 73.1 |
| T+5 | 98.4 | 65.7 | 61.6 | 53.0 | 68.7 | 86.6 | 72.3 |
| T+10 | 98.4 | **71.1** | 61.9 | 50.2 | 67.7 | 86.9 | 72.7 |
| T+15 | 98.7 | 67.3 | 59.6 | 50.5 | 68.7 | 87.4 | 72.0 |
| T+20 | **99.4** | 68.9 | 60.3 | 53.0 | 69.3 | 84.9 | 72.6 |
| Avg | 98.7 | 68.5 | 61.8 | 52.2 | 68.6 | 86.3 | |
| Avg : average | | | | | | | |

From the above tables, it can be seen that the highest average accuracy of 85.0% is achieved when the mask is used with threshold T-5. Note that the binary mask allows a 10-fold reduction in memory requirements to hold the input database, given the limited resources on an embedded platform, which is a significant step. Generally, the features extracted from the mask have the best overall performance. The three types of data all achieve their higher accuracy when the threshold is T-5, which means the exploration in the range of thresholding has positive effects on the results. The result of the masked unwrapped image has generally 10% performance degradation compared with mask and masked phase image. It is mainly because the accuracy decreases greatly in both A2 and A3 and reduces slightly in A4 and A5, which are reduced by approximately 20%, 26%, 10% and 5%, respectively. Also, note that different thresholds yield the best accuracy per activity. For instance, 100% accuracy is achieved for walking with T+20 in the masked phase domain.

These results show the efficiency of using phase and unwrapped phase information in the method of the invention for classifying human activity.

**Feature fusion and Feature selection**

After analyzing the performances of the mask, masked phase, and masked unwrapped phase image individually, they are combined with feature level fusion. Based on the previous results, in the fusion part, only the features extracted with threshold T-5 were chosen because it has the best overall performance. At this stage, the Q-SVM and 10-fold cross-validation are still used. In this case, four types of combination are provided, which are mask + masked phase (Comb 1), mask + masked unwrapped phase (Comb 2), masked phase + masked unwrapped phase (Comb 3) and all three together (Comb 4). The results are shown in Table VI. Generally, the fusion of all three types of data yields the best result, with an accuracy of 90.7%. Compared with individually using three types of data, the fusion has a great improvement in accuracy, increased by 5.7% to mask, by 6.6% to masked phase and by 17.4% by masked unwrapped phase.

[TABLE VI]. CLASSIFICATION RESULTS FOR THE DIFFERENT FUSION COMBINATIONS

| % | A1 | A2 | A3 | A4 | A5 | A6 | Avg |
|---|---|---|---|---|---|---|---|
| Comb 1 | 99.7 | 92.3 | 93.5 | 80.3 | 82.3 | **95.5** | 90.6 |
| Comb 2 | **100** | 88.8 | 88.2 | 73.1 | 82.9 | 93.4 | 87.7 |
| Comb 3 | 98.7 | 88.8 | 87.1 | 67.3 | 74.5 | 92.9 | 84.9 |
| Comb 4 | 99.7 | **92.6** | **93.5** | **80.9** | **83.5** | 94.2 | **90.7** |

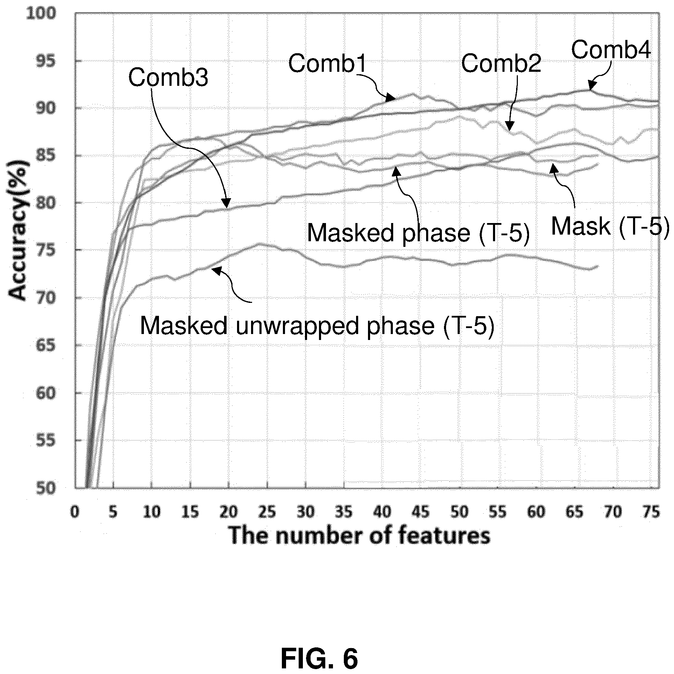

To further improve the accuracy, as well as reduce the computational loading, and evaluate the feature selection approach, the SFFS is applied to the individual results with a threshold at T-5, and the fusion results. The results are shown in Figure 6 and Table VII.

[TABLE VII]. COMPARISON USING FEATURE SELECTION

| Methods | Number of original features | Number of selected features | Accuracy (%) |
|---|---|---|---|
| Mask | 68 | **16** | **86.9** |
| Masked phase | 68 | 21 | 86.3 |
| Masked unwrapped phase | 68 | 24 | 75.7 |
| Comb 1 | 136 | **44** | **91.5** |
| Comb 2 | 136 | 50 | 89.1 |
| Comb 3 | 136 | 65 | 86.3 |
| Comb 4 | 204 | **67** | **91.9** |

Although the SFFS provides limited improvements in accuracy, it significantly reduces the number of features. Generally, the number of features is reduced to one third of the starting count. The accuracy generally increases by approximately 2% for individually used data and by 1.2% for fusion results. Note that the binary mask provides the most lightweight implementation with the highest accuracy for individual data domains with 16 features and 86.9%. For 2 combined domains, Comb 1 combining mask and masked phase yields the best accuracy with 91.5% and 44 features. For Comb 4 with all domains, 91.9% accuracy is obtained with 67 features out of the original 204, which is even fewer features than each individual domain before feature selection (68 features).

**Hierarchical structure**

Based on the previous results, the hierarchical structure is applied for optimizing classification. The activities are grouped based on similarity and misclassification rates. The 6 activities are first divided into three groups: A1 and A6, A2 and A3, A4 and A5 as shown in Fig. 3. These three pairs will go through the first classification stage, and this is followed for each pair by a binary classification. At the first stage, the fusion of all three types of data is implemented with Q-SVM and SFFS algorithm (67 feature dimensions). This strategy is also used at the second stage binary classification for the pairs of A2&A3 and A4&A5. For A1&A6, the fusion of mask and masked phase image is applied, with Q-SVM and SFFS algorithm as well (44 feature dimensions). The result is shown in TABLE VIII.

[TABLE VIII]. CONFUSION MATRIX OF 1ST STAGE CLASSIFICATION (UP) AND FINAL RESULT OF THE HIERARCHICAL CLASSIFICATION (DOWN).

| | % | A1&A6 | A2&A3 | A4&A5 | |
|---|---|---|---|---|---|
| | A1&A6 | 98.6 | 1.1 | 0.3 | |
| | A2&A3 | 0 | 94.7 | 5.3 | |
| | A4&A5 | 0 | 0.6 | 99.4 | |
| | | | | | |

(continued)

| % | A1 | A2 | A3 | A4 | A5 | A6 |
|---|----|----|----|----|----|----|
| A1 | 100 | | | | | |
| A2 | | 95.2 | | 2.9 | 1.9 | |
| A3 | | | 94.2 | 2.5 | 3.3 | |
| A4 | | | 0.7 | 84.2 | 15.1 | |
| A5 | | | 0.6 | 12.9 | 86.5 | |
| A6 | | 0.5 | 2.5 | 0.5 | | 96.5 |

The custom hierarchical structure has an average accuracy of 92.8%, which improved by 0.9% compared with the highest accuracy using normal classification. The hierarchical structure outperforms every type of activity. A4 and A5 have the greatest improvements, which are over 3%. The other four activities also improve approximately 1% to 2%. We also compare our results with different models using the same database [8]. They are listed in Table VIII. This paper uses adaptive thresholding with the SVM algorithm, which can not only achieve high accuracy but also greatly reduce the use of resources. This is also beneficial for further convenience to migrate to embedded devices.

[Table VIII] COMPARISON USING FEATURE SELECTION AND DEEP LEARNING TECHNIQUES

| Model | Accuracy |
|-------|----------|
| VGG 19 | 56% |
| Resnet50 | 91.1% |
| Mnasnet | 90.1% |
| Densenet101 | 90.5% |
| Shufflenet | 90.1% |
| Adaptive threshold with Comb 4 | 91.9% |
| **Adaptive threshold with hierarchical structure** | **92.8%** |

Sixty-eight features per image are extracted from three data domains (mask spectrogram, masked phase and masked unwrapped phase) and trained with a Q-SVM classifier. The feature level fusion and SFFS selection approach is then used with threshold T-5 that offered the best average accuracy of 91.9% with Comb 4 (mask, masked phase, and masked unwrapped phase. Based on results the hierarchical classification structure achieves 92.8% accuracy. A lightweight implementation of statistical learning combined with efficient pre-processing can then outperform deep learning techniques and bring one step closer to an implementation on resource-constrained embedded platforms.

Thus, additional feature selection and fusion approaches, such as decision level fusion, may be added to further improve the accuracy of the method. Feature selection and fusion approaches not only increase the accuracy of the classification but also allow to reduce computational loading thereby facilitating an embedded implementation of the method. These techniques can provide even higher accuracy with using hierarchical structure options. Also, the exploration of evolutionary genetic algorithms could be used to further optimize the general performances of classification.

<u>REFERENCES</u>

[1] Chen, V.C. & Li, F. & ho, shen shyang & Wechsler, H.. (2003). "Analysis of Micro-Doppler Signatures. Radar, Sonar and Navigation", IEE Proceedings, 150, pp.271-6.

[2] I. Guyon and A. Elisseeff, "An introduction to variable and feature selection," The Journal of Machine Learning Research, vol. 3, pp. 1157-1182, 2003.

[3] R. C. Luo, Chih-Chen Yih and Kuo Lan Su, "Multisensor fusion and integration: approaches, applications, and future research directions," in IEEE Sensors Journal, vol. 2, no. 2, pp. 107-119, April 2002.

[4] O. Romain, J. Le Kernec, J. Lorandel, and F. Fioranelli, "Dispositif de caracterisation de l'actimetrie d'un sujet en temps reel," Device for Characterizing the Actimetry of a Subject in Real Time", WO2021069518A1, Oct 2019.

[5] M. S. Karis, N. R. A. Razif, N. M. Ali, M. A. Rosli, M. S. M. Aras and M. M. Ghazaly, "Local Binary Pattern (LBP) with application to variant object detection: A survey and method," 2016 IEEE 12th International Colloquium on Signal Processing & Its Applications (CSPA), 2016, pp. 221-226.

[6] X. Li, Z. Li, F. Fioranelli, S. Yang, O. Romain, and J. L. Kernec, "Hierarchical Radar Data Analysis for Activity and Personnel Recognition," Remote Sensing, vol. 12, no. 14, p. 2237, Jul. 2020.

[7] Z. Li, J. Le Kernec, F. Fioranelli, O. Romain, L. Zhang and S. Yang, "An LSTM Approach to Short-range personnel recognition using Radar Signals," 2021 IEEE Radar Conference (RadarConf21), 2021, pp. 1-6, doi: 10.1109/RadarConf2147009.2021.9455218.

[8] X. Zhou, T. Jin, and H. Du, "A lightweight network model for human activity classification based on pre-trained mobilenetv2," 2020 IET international radar conference, 2021, pp. 1483-1487.

[9] Otsu, N. (1979) A Threshold Selection Method from Gray-Level Histogram. IEEE Transactions on System Man Cybernetics, 9, 62-66.

[10] Zhou, B., Lin, Y., Le Kernec, J. , Yang, S. , Fioranelli, F. , Romain, O. and Zhao, Z. (2021) Simulation framework for activity recognition and benchmarking in different radar geometries. IET Radar, Sonar and Navigation, 15(4), pp. 390-401.

**Claims**

1. A method (100) of classifying in real-time human activity from a micro-Doppler signature image comprising :

   - acquiring at least: one complex-valued spectrogram image (110) comprising a plurality of pixels in a RGB code from a radar, having a phase image, an unwrapped phase image and an amplitude image associated with said complex-valued spectrogram image (110);
   - converting the amplitude spectrogram image (110) into a grayscale image (120) to obtain monochromatic pixels;
   - obtaining a binary image mask (130) to identify a Region Of Interest (ROI) comprising one or several segmented areas, using an adaptive or a fixed threshold based on amplitude levels of the monochromatic pixels of the grayscale image;
   - applying the binary masked image (140) with the identified ROI on phase image associated with the complex-valued spectrogram image (110), or on unwrapped phase image associated with the complex-valued spectrogram image (110)
   to obtain, respectively, masked phase image or masked unwrapped phase image;
   - calculating features (150) from said masked phase image or masked unwrapped phase image;
   - classifying the micro-Doppler image signature (170) in a class relating to the human activity, according to a set of the calculated features, using a classifier trained with features calculated applying the above steps on spectrogram images of known human activities.

2. The method (100) according to claim 1, wherein the step of applying binary image mask (140) further comprises applying binary image mask to the spectrogram images to obtain masked spectrograms with the isolated ROI, and calculated features from the masked spectrograms with ROI for micro-Doppler image signature classification (170).

3. The method (100) according to any one of claims 1 or 2, wherein calculated features used to classify the micro-Doppler image signature are geometric features of the ROI and/or of the amplitudes (masked spectrogram) and/or phases (masked phase and/or masked unwrapped phase), preferably selected from the perimeter, area, centroid, eccentricity, orientation and/or major and minor axis length of the ROI.

4. The method (100) according to any one of claims 1 to 3, wherein calculated features are chosen from textural features, empirical features, physical features, automatically extracted features or radar features of the masked spectrogram.

5. The method (100) according to any one of claims 1 to 4, wherein the binary image mask obtained in step (130) is obtained by :

- selecting an initial threshold $\mu$ (131),
- updating the initial threshold $\mu$ (132), based on information contained in the ROI selected to obtain a final threshold, said updating step (132) comprising steps of:

a- dividing the image (133) according to the pixel value and the threshold $\mu$ such as the pixel value is smaller or greater than the threshold $\mu$,
b- selecting another threshold T (134) corresponding to the average pixel value,
c- comparing (135) the threshold $\mu$ and the another threshold T :

if the difference between $\mu$ and T is greater than or equal to a predetermined value V, then use threshold T instead of $\mu$ and repeat steps a-c;
if the difference is lower than the predetermined value, then selecting the threshold T as the final threshold,
- implementing the final threshold value (136) to binarize the grayscale spectrogram image, thereby obtaining the binarized image mask.

6. The method (100) according to claim 4, wherein textural features of the image are selected from the local binary pattern and/or moment of the image.

7. The method (100) according to claim 4, wherein radar features are selected from the entropy of spectrogram, skewness of spectrogram, centroid of spectrogram, bandwidth of spectrogram, energy curve and/or singular vector decomposition.

8. The method (100) according to any one of claims 1 or 2, wherein the set of calculated features used to classify the micro-Doppler image signature (170) is obtained by fusing feature level or decision level information from at least two categories of: the binary image mask, the masked phase image, the masked unwrapped phase image, or masked spectrogram.

9. The method (100), according to any one of claims 1 to 8, further comprising a feature selection step (160) by using a wrapper method, a filter method and/or an embedded method.

10. The method (100) according to claim 9 wherein the feature selection step (160) is performed by applying a Sequential Feature Selection (SFS) algorithm or a Sequential Forward Floating Selection (SFFS) algorithm on calculated features.

11. Device (1) for **characterizing in** real-time a human activity comprising :

- a radar (2) transmitting and receiving radar signals having a software interface for configuring the form of the transmitted signal,
- processing and calculation means (3) coupled to the radar, being configured to, in real-time :

• acquire at least one complex-valued spectrogram image (110) comprising a plurality of pixels in an RGB code from a radar, having a phase image and/or an unwrapped phase image and an amplitude image associated with said complex spectrogram image (110);
• convert said complex spectrogram image (110) into a grayscale image (120), to obtain monochromatic pixels;
• obtain a binary image mask (130) to identify a region of interest (ROI) comprising one or several segmented areas by using an adaptive or a fixed threshold based on amplitude levels of the monochromatic pixels of the grayscale image;
• apply the binary masked image (140) with the identified ROI on phase image associated with the complex spectrogram image (110) or on unwrapped phase image associated with the complex spectrogram image (110), to obtain, respectively, masked phase image or masked unwrapped phase image;
• calculate features from said masked phase image or masked unwrapped phase image;
• classifying the micro-Doppler image signature (170) in a class relating to the human activity, according to a set of the calculated features, using a classifier trained with features calculated applying the above steps on spectrogram images of known human activities;

said processing and calculation means (3) comprising said trained classifier; and

- storage means (4) coupled to the processing and calculation means (3) to store the classifier, the micro-Doppler images, the grayscale images, the binary mask, the masked images and the classification decisions.

12. The device according to claim 11, wherein the processing and calculation means (3) are also configured to, in real-time, obtain masked spectrograms with the isolated ROI by applying binary image mask to the spectrogram images, and uses calculated features from said masked spectrograms with ROI to classify the micro-Doppler image signature (170).

13. The device according to any one of claims 11 or 12, wherein the processing and calculation means (3) are configured to calculate geometric features of the ROI and/or of the amplitudes (masked spectrogram) and/or phases (masked phase and/or masked unwrapped phase), and to use it to classify the micro-Doppler image signature in a class relating to the human activity.

14. The device according to any one of claims 11 to 13, wherein the processing and calculation means (3) are configured to fuse calculated features at feature level or decision level information from at least two categories of: the binary image mask, the masked phase image, the masked unwrapped phase image, or masked spectrogram.

15. The device according to any one of claims 11 to 14, said device being embedded.

100

110 Acquiring at least
one complex-valued spectrogram image with plurality of
pixels in RGB code

120 Converting complex-valued spectrogram image into a
grayscale image

130 Obtaining a binary mask to identify ROI using an
adaptative or fixed threshold

140 Applying the binary mask with the identified ROI on
phase or unwrapped phase image

150 Calculating features from said masked phase or
unwrapped phase image

160 Selecting features by using wrapper, filter and/or
embedded method

170 Classifying micro-doppler image signature in the class
relating to the human activities

FIG. 1

100

110 **Acquiring at least**

**complex spectrogram image**

**A phase image and/or an unwrapped phase image**

120 converting complex spectrogram image into a grayscale image

130

131 Selecting an initial threshold μ

132 Updating the initial threshold μ

133 dividing the image according to the pixel value and the threshold μ

134 selecting another threshold T

replacing μ by T

comparing the threshold μ and another threshold T

μ-T≥V

135

μ-T< V

136 implementing the final threshold value to binarize the grayscale

140 Applying the binary mask with the identifier ROI on phase or unwrapped phase image

**FIG. 2**

**FIG. 3**

**FIG. 4**

Spectrogram → Adaptive threshold → Mask

Mask → Cover → Grayscale Phase image → Masked Phase image

Mask → Cover → Grayscale unwrapped Phase image → Masked unwrapped Phase image

EP 4 194 886 A1

**FIG. 5**

**FIG. 6**

FIG. 7

**EP 4 194 886 A1**

Europäisches
Patentamt

European
Patent Office

Office européen
des brevets

# EUROPEAN SEARCH REPORT

Application Number

EP 21 30 6742

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | LI ZHENGHUI ET AL: "An LSTM Approach to Short-range personnel recognition using Radar Signals", 2021 IEEE RADAR CONFERENCE (RADARCONF21), IEEE, 7 May 2021 (2021-05-07), pages 1-6, XP033926022, DOI: 10.1109/RADARCONF2147009.2021.9455218 [retrieved on 2021-06-14] * the whole document * | 1-15 | INV. G01S7/41 G01S13/58 |
| A,D | LI XINGZHUO ET AL: "Hierarchical Radar Data Analysis for Activity and Personnel Recognition", REMOTE SENSING, vol. 12, no. 14, 12 July 2020 (2020-07-12), page 2237, XP055925653, DOI: 10.3390/rs12142237 * the whole document * | 9,10 | |
| A | KWON JIHOON ET AL: "Human detection by Neural Networks using a low-cost short-range Doppler radar sensor", 2017 IEEE RADAR CONFERENCE (RADARCONF), IEEE, 8 May 2017 (2017-05-08), pages 755-760, XP033104164, DOI: 10.1109/RADAR.2017.7944304 [retrieved on 2017-06-07] * the whole document * | 1-15 | **TECHNICAL FIELDS SEARCHED (IPC)** G01S |

-/--

The present search report has been drawn up for all claims

| Place of search | Date of completion of the search | Examiner |
|---|---|---|
| Munich | 1 June 2022 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 21 30 6742

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KIM YOUNGWOOK ET AL: "Human Detection Using Doppler Radar Based on Physical Characteristics of Targets", IEEE GEOSCIENCE AND REMOTE SENSING LETTERS, IEEE, USA, vol. 12, no. 2, 1 February 2015 (2015-02-01), pages 289-293, XP011557283, ISSN: 1545-598X, DOI: 10.1109/LGRS.2014.2336231 [retrieved on 2014-08-21] * the whole document * ----- | 1-15 | |

**TECHNICAL FIELDS SEARCHED (IPC)**

The present search report has been drawn up for all claims

| Place of search | Date of completion of the search | Examiner |
|---|---|---|
| Munich | 1 June 2022 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021069518 A

**Non-patent literature cited in the description**

- **CHEN, V.C. ; LI, F. ; HO, SHEN SHYANG ; WECHSLER, H.** Analysis of Micro-Doppler Signatures. Radar, Sonar and Navigation. *IEE Proceedings,* 2003, vol. 150, 271-6
- **I. GUYON ; A. ELISSEEFF.** An introduction to variable and feature selection. *The Journal of Machine Learning Research,* 2003, vol. 3, 1157-1182
- **R. C. LUO ; CHIH-CHEN YIH ; KUO LAN SU.** Multisensor fusion and integration: approaches, applications, and future research directions. *IEEE Sensors Journal,* April 2002, vol. 2 (2), 107-119
- **M. S. KARIS ; N. R. A. RAZIF ; N. M. ALI ; M. A. ROSLI ; M. S. M. ARAS ; M. M. GHAZALY.** Local Binary Pattern (LBP) with application to variant object detection: A survey and method. *2016 IEEE 12th International Colloquium on Signal Processing & Its Applications (CSPA),* 2016, 221-226
- **X. LI ; Z. LI ; F. FIORANELLI ; S. YANG ; O. ROMAIN ; J. L. KERNEC.** Hierarchical Radar Data Analysis for Activity and Personnel Recognition. *Remote Sensing,* July 2020, vol. 12 (14), 2237
- **Z. LI ; J. LE KERNEC ; F. FIORANELLI ; O. ROMAIN ; L. ZHANG ; S. YANG.** An LSTM Approach to Short-range personnel recognition using Radar Signals. *2021 IEEE Radar Conference (RadarConf21),* 2021, 1-6
- **X. ZHOU ; T. JIN ; H. DU.** A lightweight network model for human activity classification based on pre-trained mobilenetv2. *2020 IET international radar conference,* 2021, 1483-1487
- **OTSU, N.** A Threshold Selection Method from Gray-Level Histogram. *IEEE Transactions on System Man Cybernetics,* 1979, vol. 9, 62-66
- **ZHOU, B. ; LIN, Y. ; LE KERNEC, J. ; YANG, S. ; FIORANELLI, F. ; ROMAIN, O. ; ZHAO, Z.** Simulation framework for activity recognition and benchmarking in different radar geometries. *IET Radar, Sonar and Navigation,* 2021, vol. 15 (4), 390-401